Europäisches Patentamt

European Patent Office

Office européen des brevets

(19)

(11) Publication number: **0 393 844**

**A2**

# EUROPEAN PATENT APPLICATION

(21) Application number: **90302915.5**

(22) Date of filing: **19.03.90**

(51) Int. Cl.5: **G06F 3/033, G06F 15/72**

The title of the invention has been amended (Guidelines for Examination in the EPO, A-III, 7.3).

(30) Priority: **24.03.89 JP 70443/89**

(43) Date of publication of application:
**24.10.90 Bulletin 90/43**

(84) Designated Contracting States:
**DE FR GB IT**

(71) Applicant: **International Business Machines Corporation**
**Old Orchard Road**
**Armonk, N.Y. 10504(US)**

(72) Inventor: **Hidaka, Kazuyoshi**
**2-177 Fujidana-cho, Nishi-ku**
**Yokohama-shi, Kanagawa-ken(JP)**

(74) Representative: **Harris, Ian Richard**
**IBM United Kingdom Limited Intellectual**
**Property Department Hursley Park**
**Winchester, Hants. SO21 2JN(GB)**

(54) **Data processing system with graphics capability.**

(57) A data processing system including a pointing device, such as a mouse, and a display wherein a line segment can be drawn accurately and efficiently on the display so that it contacts an existing segment at a desired angle and setting of the value of the angle at each vertex in drawing a series of joined line segments can be carried out accurately and efficiently.

FIG. 16

EP 0 393 844 A2

## DATA PROCESSING SYSTEM

The invention relates to a data processing system wherein a line segment may be input on a display using a pointing device.

Data processing systems provided with graphics capability and pointing devices have spread from large mainframe computing machines to engineering workstations for CAD/CAM and personal computers.

In a typical such data processing system the method for inputting a segment using a pointing device, such as a mouse, follows the procedure of (i) selecting the start point of the segment by the graphic cursor, (ii) determining the start point by depression of the button of the mouse, (iii) displaying the graphic cursor and the segment connecting this graphic cursor to the start point determined in (ii) on a CRT screen, and renewing the segment to be displayed according to the movement of the graphic cursor, (iv) selecting the coordinate position pointed by the graphic cursor as the end point of the segment, and (v) determining the end point by depressing the mouse button to draw a final segment. In this procedure the geometric data defining this segment are usually stored within the data processing system simultaneously with plotting on the screen.

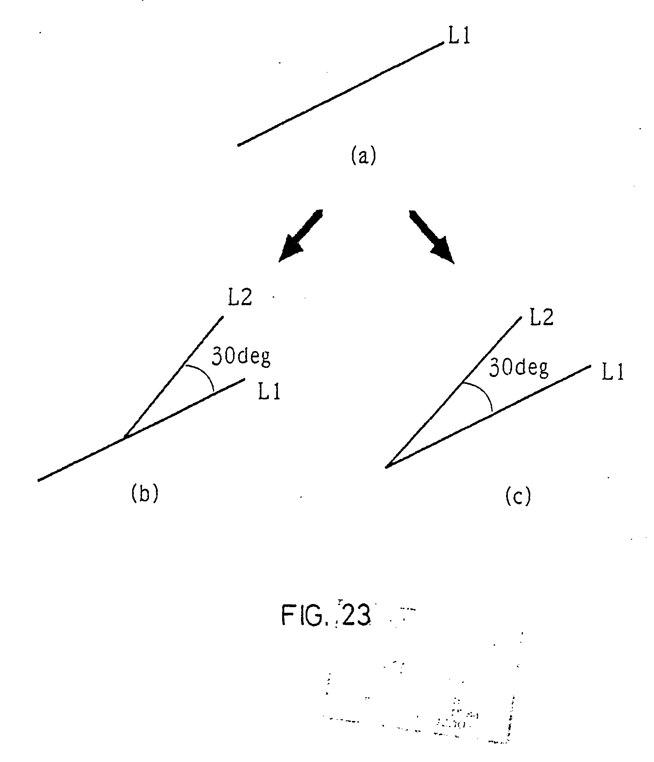

The designations of coordinate positions in these operations are all carried out by sequentially moving the graphic cursor on the CRT screen, as shown in Figure 22, to the required position but it is usually impossible to set the segment to be drawn so that it has a certain desired angle with respect to a segment already existing on the screen.

For example, in "HyperCard" (trademark) made by Apple Computer, Inc., the position of the graphic cursor (the possible end points of the segment) in the above described (iii) is restricted to lie on lines radiating from the start point with angles in multiples of 15 degrees with respect to the horizontal line of the CRT screen.

In the graphic input processor for the word processor "Hanako" (trademark) made by Just Systems Corporation, there is a function which displays the length of a segment and the angle to the horizontal line of the screen numerically, when drawing a line, in an upper corner of the screen.

In addition, there are methods which display a grid on the CRT screen, and methods of displaying X-Y coordinate values in the neighborhood of the end point candidate in the above described (iii).

However, referring to figure 23, it is impossible to additionally draw such a segment L2 as shown in (b) and (c) which meets such an oblique segment L1 as (a) at a specified angle (30 degrees in figure 23) by any of the above methods.

In Japanese Published Unexamined Patent Application No. 61-281330, a method is described wherein a user may set a horizontal reference line and subsequently select a reference point on the horizontal line for drawing a line. A scale is then displayed whose centre is the above-mentioned reference point and whose zero degree line is the above-mentioned horizontal line. However, The disclosure does not contain a technique for selecting any existing line on the CRT screen as a reference line. Even if the method of this specification could be interpreted to state that it can set a reference line over any segment existing on the CRT screen, the user must set a reference line over an existing segment on the CRT screen each time a segment is additionally drawn. Therefore there is a large defect in the operational efficiency, accuracy and use of this method.

Consequently, in a conventional data processing system of this type, when a segment is additionally drawn on the CRT display using a means for specifying a coordinate position, such as a mouse, it is very difficult to accurately and simply specify the angle at which this segment is set with respect to an existing segment.

Furthermore, it is difficult to draw a series of joined line segments while setting a desired value of the angle at each intermediate point.

According to the present invention there is provided a data processing system including a display, a pointing device for designating a point on a screen of said display, and a data storage apparatus, and characterised in further including:

(a) means for selecting a line existing on the screen and a point thereon in response to the designation of a point on the screen by said pointing device,

(b) means for generating geometric data of boundary lines of a plurality of angular regions on the screen, with the selected line as the reference line and centred on a reference point which is the selected point thereon,

(c) means for determining the boundary line which is closest to a newly designated point on the basis of said geometric data of the boundary lines, determining the point thereon which is closest to the designated point, generating the geometric data of the determined point, and displaying the segment which starts at said reference point and ends at said determined point as an input candidate, each time a new point is designated by said pointing device,

(d) means for determining that the segment displayed as an input candidate is the segment to be input finally, and

(e) means for storing the geometric data of the end point of the segment determined by said means (d) into said data storage apparatus.

According to another aspect of the invention there is provided a data processing which, in addition to said means (a) through (e), further includes:

(c') means for displaying the segment which connects said reference point to a newly designated point each time a new point is designated by said pointing device, and

(f) means for selecting either the mode in which said means (c) is activated or the mode in which said means (c') is activated.

According to another aspect of the invention there is provided a data processing system wherein, when no line is found to be selected as a reference line, said means (a) selects the point designated by said pointing device as a reference point, and selects the line of a predetermined direction passing through this point as a reference line.

According to another aspect of the invention there is provided a data processing system which further includes,

(a') means for selecting the segment created just before as a reference line and selecting the end point of said segment as a reference point.

According to another aspect of the invention there is provided a data processing system which further includes,

(g) means for displaying a scale on the basis of the geometric data of the boundary lines generated by said means (b).

The invention is further described with reference to the ensuing description and the following figures,

Figure 1 is a flowchart showing the processing procedure of a first embodiment of this invention;

Figure 2 is a flowchart showing the processing procedure of a second embodiment of this invention;

Figure 3 is a flowchart showing the processing procedure of a third embodiment of this invention;

Figure 4 is an external appearance illustration of a data processing system according to the present invention;

Figure 5 is a block diagram of the functional structure of a data processing system according to the present invention;

Figure 6 is an illustration showing existing segments on a display screen;

Figure 7 is a table in which the geometric data of existing segments on the display screen are stored;

Figure 8 illustrates an example of an angular scale image, EP;

Figures 9 to 14, Figures 16 and 17 are illustrations explaining the operation when a single additional segment is drawn;

Figure 15 is a table in which the geometric data of the boundary lines are stored;

Figure 18 is a table in which the geometric data of a continuous series of segments are stored;

Figure 19 illustrates an example of the operation of the present invention when a joined series of segments are drawn;

Figure 20 illustrates another example of the operation of the present invention when a series of continuous segments is drawn;

Figure 21 is an explanatory illustration of the operation of the present invention for selecting an internally dividing point of a reference line;

Figure 22 illustrates examples of the graphic cursor; and

Figure 23 illustrates examples which present difficulty for prior art systems.

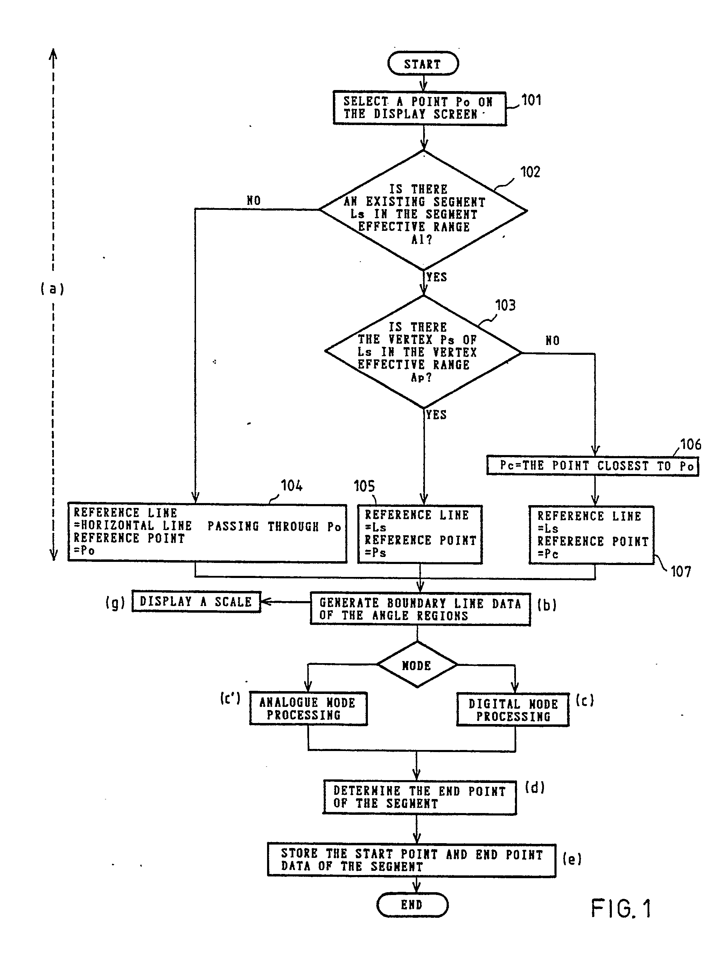

An outline of the operation of the invention is described with reference to figure 1.

To create a new segment, first a point on the CRT display is selected using a pointing device (such as a mouse), this point will be referred to as Po (101). A determination is made as to whether or not an existing segment passes within a segment effective range A1, of an independently defined size, which is centred around Po, and if this is the case, that segment is selected and will be referred to as the segment Ls (102).

If there is an Ls, a determination is made as to whether or not either of the two vertices of Ls lies within the vertex effective range Ap, and if so, this vertex is selected and will be referred to as Ps (103).

If there is no Ls, Po is made the reference point, and a line of a predetermined direction passing through Po is made the reference line (104).

If there is an Ls but no Ps, a point, which will be referred to as Pc on Ls which is closest to Po is calculated (106), and Ls is made the reference line and Pc the reference point (107).

If there are both Ls and Ps, Ls is made the reference line and Ps the reference point (105).

After the reference line and reference point have been determined in this way, geometric data of the boundary lines of angular regions on the CRT screen are generated. The geometric data of the boundary lines are also used by a scale displaying means.

After that, the point Pm designated by the pointing device is sequentially updated and defined each time its coordinates change, and the point which is closest to Pm among those on all the boundary lines will be referred to as Pd, which is also renewed as Pm changes, and only the newest segment connecting the reference point to Pd is displayed on the CRT screen each time Pd is updated. When a signal of termination is provided from the pointing device, the reference point and Pd at that time are determined as the start point and the end point of a segment to be obtained, respectively, and the two-dimensional coordinate value of the two points are recorded and the segment connecting these two points is drawn on the CRT screen.

Alternatively, Pm itself may be made Pd, and only the newest segment connecting the reference point to Pd may be displayed on the CRT screen each time Pm, namely Pd is updated.

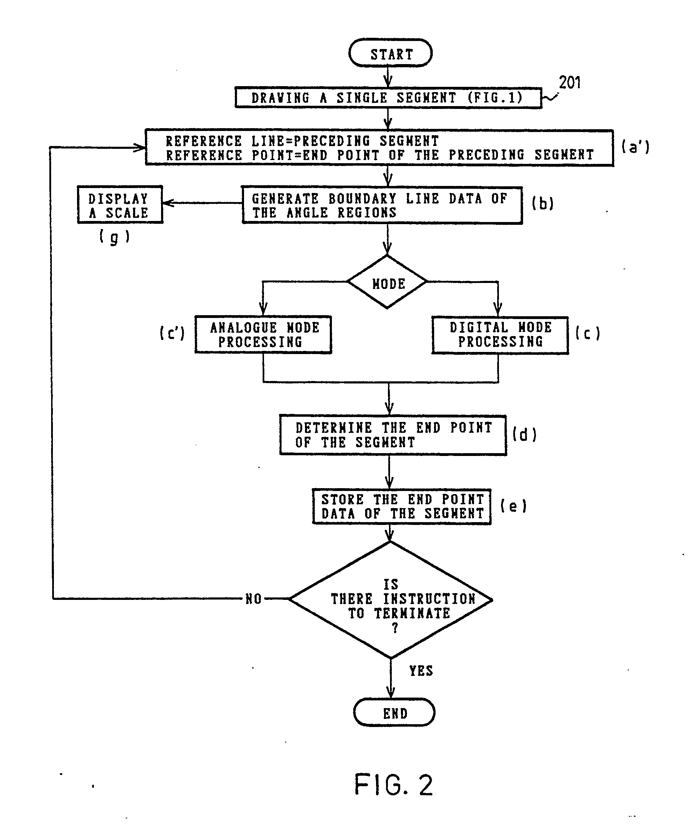

Additionally, with reference to figure 2, a means for repeating the above-mentioned line drawing with the previously plotted segment being the new Ls and Pd being the new Ps may be provided whereby a series of continuous segments can be drawn while setting the angles at intermediate points to desired values. In that case, the first segment is drawn following the procedure of figure 1 (201).

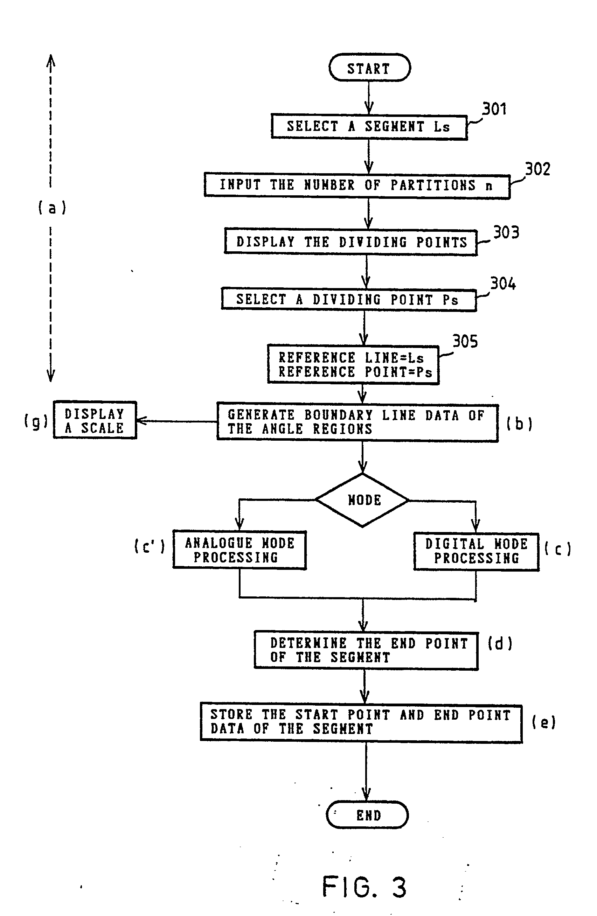

In the example shown in figure 3, the internally dividing points df a segment Ls are displayed, and the reference point is selected from the internally dividing points (301 to 305).

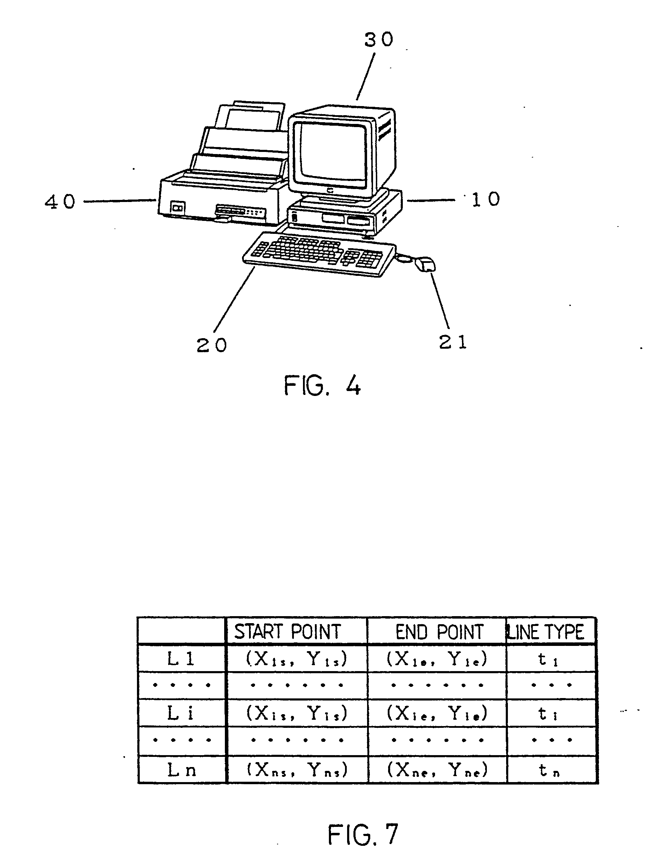

Figure 4 is an external appearance of a data processing system according to the invention. It comprises a main unit 10 for carrying out information processing such as numerical calculation and symbolic manipulation, a keyboard 20 as means for inputting character information, a mouse 21 which is means for determining a coordinate position on a display, a display 30 for outputting the processed information to the user, and a printer 40 for printing character and image information.

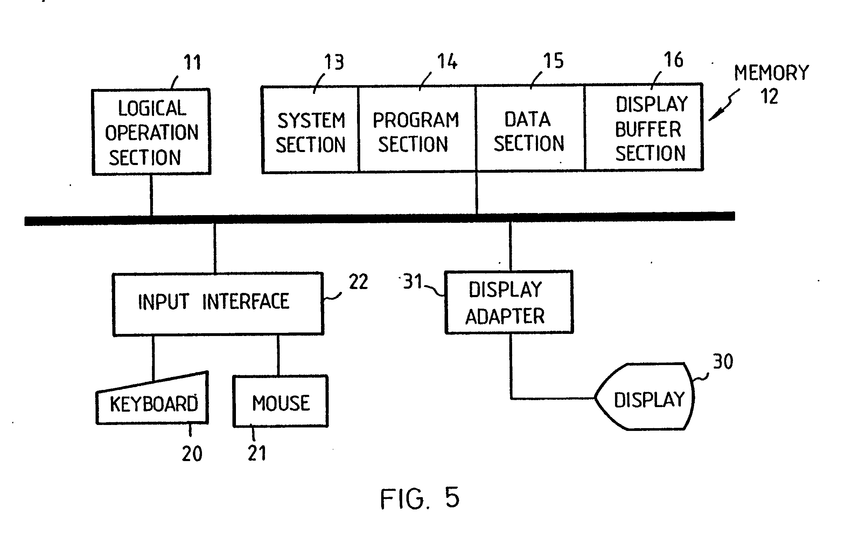

Figure 5 is a block diagram of the functional structure of a data processing system according to the invention.

We will describe examples of the operation of the invention separately for the cases of drawing a single segment and drawing a series of joined segments. The program section 14 in the memory 12 which provides control of the process. The distance values A1 and Ap for defining the segment effective range and the vertex effective range respectively are stored in the data section 15.

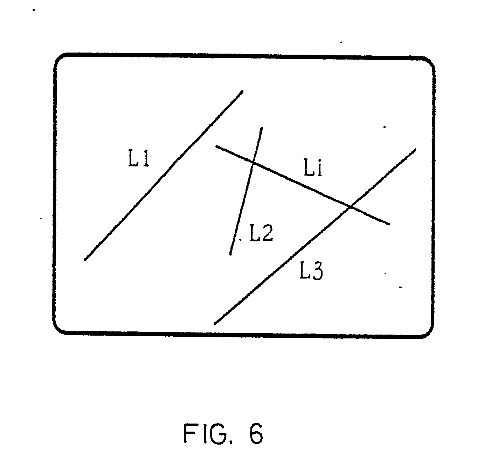

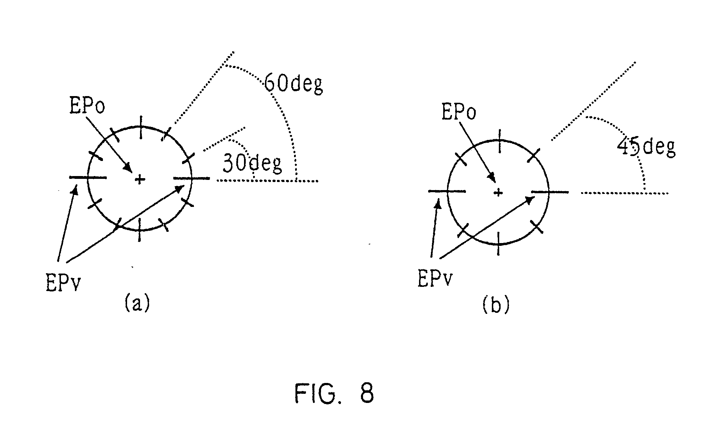

Now, it is supposed that n segments Li (i = 1, 2, ... n) have already been drawn on the display 30 (Figure 6). At this time, the image of the Li exists in a display buffer section 16, and simultaneously, start points Pis (Xis, Yis) and end points Pie (Xie, Yie), and the type and thickness of the line Li as display information are recorded in the data section 15 (Figure 7).

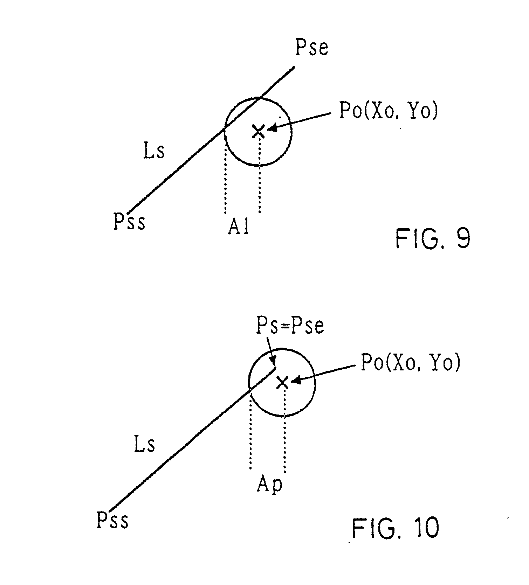

First, referring to figure 9, when the first button click of the mouse 21 is sensed through an input interface 22, the position of the graphic cursor on the display 30 at that time, namely, the X-Y coordinate values of a point Po are recorded in the data section 15 as Xo and Yo. Using Xo, Yo, and Xis, Yis, Xie, Yie (i = 1, 2, ... n) and A1, a determination is made by a logical operation section 11 as to whether or not a line segment Li, passing through a circle having a radius of A1 and centred around the point Po, exists. If a segment satisfies this condition, this segment Ls is selected. This is the case in figure 9.

Further, referring to figure 10, whether or not the start point Pss or the end point Pse of Ls is included in a circle having a radius of Ap and centred around Po is determined by the logical operation section 11 using Xo, Yo, Xss, Yss, Xse, Yse and Ap. If there is a point which is included, this is made Ps. This is the case in figure 10.

After this, the processing continues separately for the following three cases according to whether Ls and Ps have been selected.

The image shown in Figure 8 will be hereafter referred to as "EP," which is a scale for setting the angle of a segment. The left half of Figure 8 is an example of a graduation pitch of 30 degrees and the right half is an example of a graduation pitch of 45 degrees. The graduation pitch can be set arbitrarily. As shown in figure 8, the centre of EP is called EPo and the axis for the reference line of EP is called EPv.

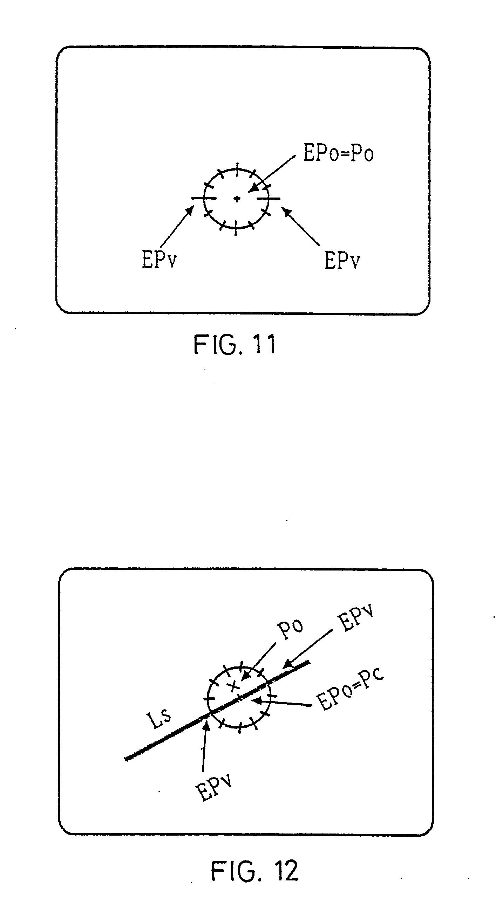

In the case where Ls could not be selected (Figure 11). The image EP is displayed on the display 30 so that the centre EPo thereof is superposed on Po and the axis EPv is parallel to the horizontal axis of the screen.

In the case where Ls was selected, but Ps could not be selected (Figure 12). The image EP is displayed on the display 30 so that the centre EPo thereof is superposed on a point Pc on Ls which is closest to Po and the axis EPv is in parallel with Ls. Following is a description of an example of how to obtain the point Pc. From the coordinate values of both end points of Ls, the directional data of Ls, hence the directional data of the perpendicular of Ls is obtained. Accordingly, the equation of the perpendicular passing through Po is obtained, so, by solving the simultaneous equations of this and the equation of Ls, the coordinate values of the intersection point Pc may be obtained.

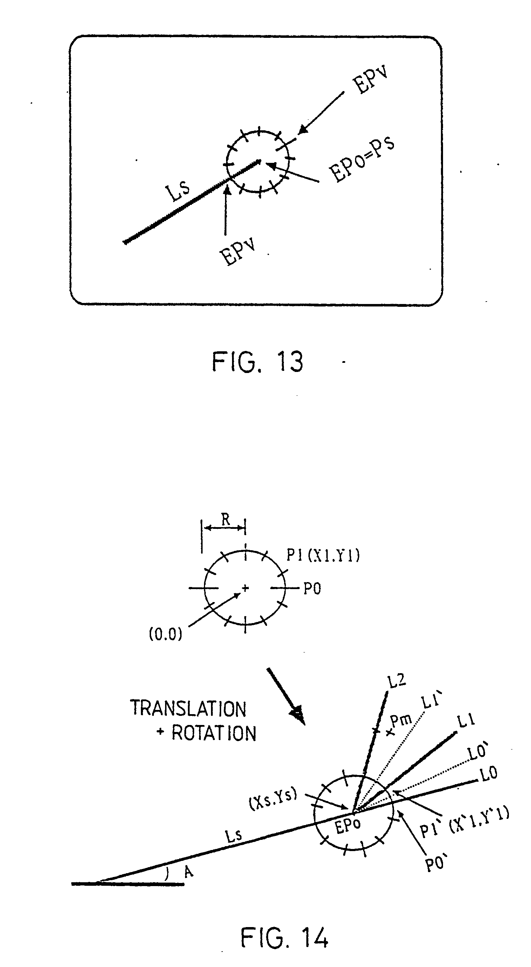

In the where both Ls and Ps could be selected (Figure 13). The image EP is displayed on the display device 30 so that the centre EPo thereof is superposed on Ps (Xs, Ys) and the axis EPv is in parallel with Ls.

Using the latter case as an example, how the image EP is displayed is described with reference to Figure 14. The description is made on the assumption that primitive data of several types of scales such as of 15-degree graduation and one-degree graduation are previously stored. An example of a primitive of a 30-degree graduation scale is shown in Figure 14. Its radius R and the positional data of each graduation when its centre is supposed to be (O, O), for instance the coordinates (X1, Y1) of P1, are previously generated and stored in the data section 15. By causing this primitive to be translated by (Xs, Ys) and rotating it by the angle A that the segment Ls forms with the horizontal line, geometric data for displaying the image EP, for instance the coordinate values (X1$'$, Y1$'$) of a graduation P1$'$, are obtained. The value of the angle A is obtained from the coordinate values of both end points of the segment Ls. Of course, the geometric data of the image EP may directly be generated on the basis of the data of (Xs, Ys), R, A and the graduation pitch without using the primitive.

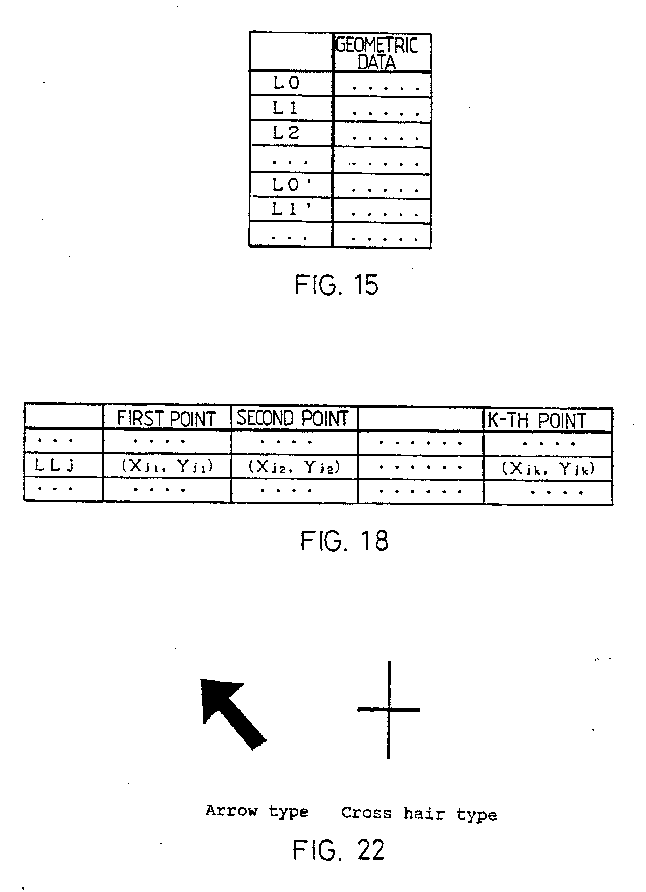

In this example, a group of lines (L0, L1, L2 ...) passing through the centre and one graduation respectively is supposed, and a region sandwiched by the adjacent lines is defined as one angular region. Therefore, lines L0, L1, etc. are the boundary lines between the angular regions. In this example, the coordinate values of the reference point EPo and all graduation points are the primary geometric data of the boundary lines. Since the coordinate values of points Ps, P0$'$, P1$'$, etc. are known, it is easy to obtain the secondary geometric data of the boundary lines such as L0, L1 (coefficients of the equations). Further, the geometric data of lines L0$'$, L1$'$ ... which bisect the angular regions, that is, lines forming angles of 15 degrees, 45 degrees etc. with Ls are also obtained in this embodiment. The data of these lines are also stored in the data section 15. (Figure 15). Of course, these data may be erased after being used to draw a segment.

In any of the above cases, the image EP is displayed on the display 30. The next stage of the procedure is to draw a segment whose start point is the center of this EP by the operation with the mouse, referencing the angle graduations allocated to EP.

That is, first through the input interface 22, the positional coordinates (Xm, Ym) of a point Pm on the display designated by the mouse 21 are read. This Pm follows the movement of the mouse and changes its coordinate values according to the position of the cursor, For each change, the operation of either the following steps (iv) or (v) is performed until the second click of the mouse button is sensed.

In the following, which operation of (iv) or (v) is carried out may be, for example, previously selected by the user prior to all the operations. And the operational environment of (iv) is called a digital mode, and the operational environment of (v) is called an analogue mode.

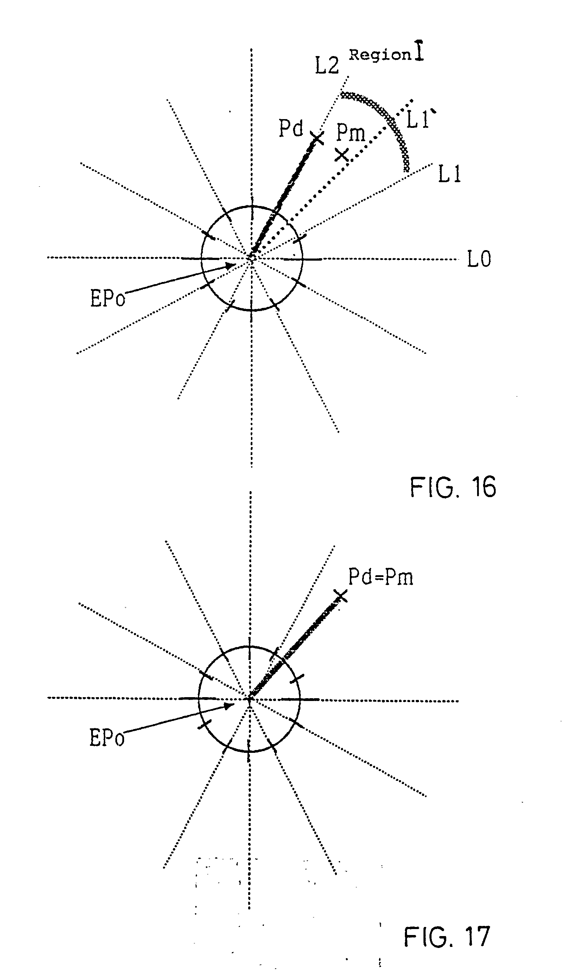

(iv) The image EP divides the coordinate system on the display 30 by its graduations into regions radiating from EPo, the number of which is equal to the number of the graduations. And the point on the region boundary lines which is closest to Pm is made Pd, and the segment connecting EPo to Pd is displayed on the display 30 (Figure 16).

An example of how to determine the point Pd described below. The two equations of lines L1 and L2 are supposed to be y = f1(x) and y = f2(x), respectively. Regarding the point Pm, it can be known that the point Pm exists in a region I utilising f2(Xm) > Ym > f1(Xm). To which of L1 and L2 the point Pm is closer is determined by the line L1$'$. That is, if the equation of line L1$'$ is supposed to be y = f1$'$(x), it can be known that Pm is closer to Lm utilising f2(Xm) > Ym > f1$'$(Xm) in the case of Figure 16. The method of obtaining the coordinate values of Pd from the geometric data of Pm and L2 is same as the method by which the coordinate values of Pc were obtained in Figure 12.

(v) Pm is made Pd as it is, and the segment connecting EPo to Pd is displayed on the display 30 (Figure 17).

It should be noted that, for both (iv) and (v), the data of Pd is renewed each time the mouse moves, and only the latest segment connecting EPo to Pd is displayed.

When the second click of the mouse is sensed, EPo and Pd at that time are made the start point and the end point of the segment to be finally obtained, and the X-Y coordinate values of them are registered in the data section 15, attaching a control number of i = n + 1 respectively. Thereafter, the image EP and the excessive segments displayed in the operational stage (iv) or (v) are erased from the display 30, whereby all the operations are completed.

Since, in this way, a segment is additionally drawn while referencing the graduations of the image EP which is dynamically placed according to the status of the display and, as the case may be, while restricting the position of the end point candidate of the segment on the boundary lines of the angle regions which are dynamically placed, the angle a new segment makes with an existing segment can be specified accurately.

In addition, since the graduations of the image EP can be changed at an arbitrary point of time by, for instance, invoking a scale of a different graduation pitch, line drawing can be done at any angle. Particularly, it is convenient if a primitive of one-degree graduation is prepared. In that case, if, for instance, a user first specifies a digital mode of 10-degree graduation to determine a rough position of a segment, and then instructs the change to an analogue mode or to a digital mode of one-degree graduation via the keyboard to carry out fine positioning of the segment, the operation may be made very straightforward.

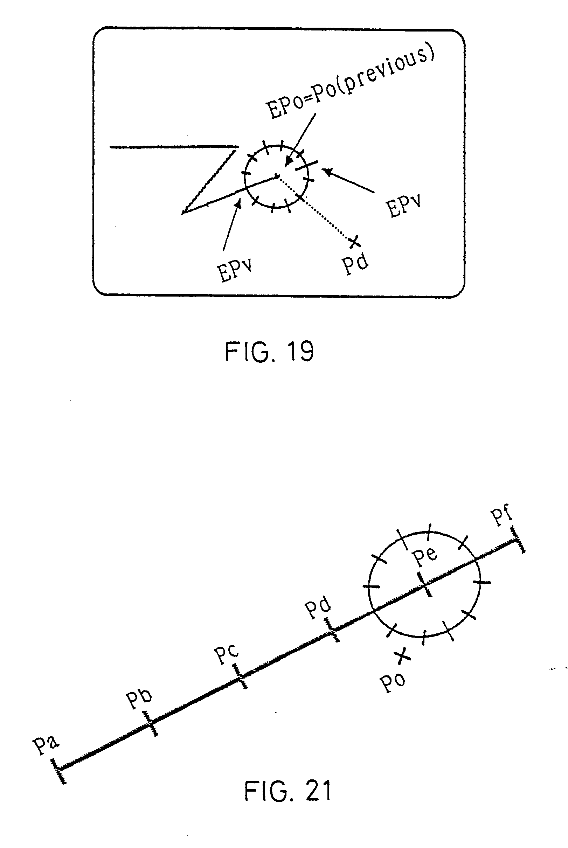

Drawing of a series of continuous series of segments will now be described with reference to figure 19. The above procedure is followed for drawing the first segment. Now, it is supposed that one segment has been drawn by this on the display 30. In the data section 15, the X-Y coordinate values of EPo are recorded as the first point of a series of continuous segments LLj, and the X-Y coordinate values of Pd are recorded as the second point (Figure 18). The table of Figure 18 may be separated from that shown in Figure 7. Alternatively, the latter can be part of the former. In the mode of drawing a continuous series of segments, the segment drawn just before and its end point are chosen as a scale, hence a reference line and a reference point. The other steps are the same as those for a single segment. Accordingly, the image EP is displayed so that EPo is superposed upon Pd and the reference axis EPv is in parallel with the segment which has just been drawn.

Then, the above steps (iv) or (v) are repeated until the click of the button of the mouse 21 is sensed, whereby the second section of a continuous series of segments is determined. The geometric data of the end point of the determined segment are registered as the geometric data of the third point of LLj. When the second segment has been determined, the same process is repeated with the reference point and the reference line being changed to the current Pd and to the segment just determined, respectively. In this way, by drawing a continuous series of segments while referencing the image EP which is dynamically displayed for each section and if needed, restricting the position of the end point candidate of the segment on the boundary lines between the angular regions which are dynamically placed, the angle at each intermediate point can be set arbitrarily.

The above operations are performed until the double clicks of the mouse 21 button are sensed (assuming that the other mouse clicks are all single clicks), and at the stage where all the operations are completed, only a continuous series of segments has been additionally drawn on the display and the coordinate values of the start point, end point and intermediate points of the continuous series of segments are recorded in the data section 15.

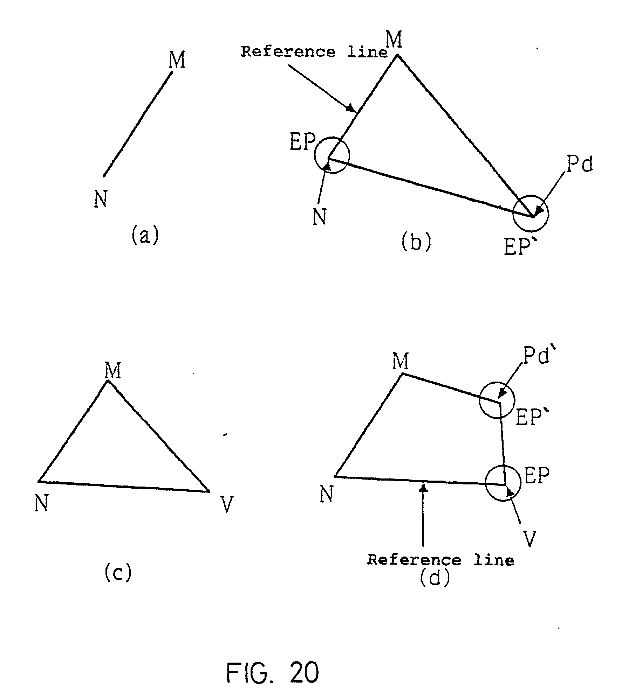

In Figure 20, a variation of the mode for drawing a series of continuous segments is shown. In this example, a segment connecting one end (M) of the segment selected first as the reference line (MN) to the end point candidate of the input segment (Pd) is always displayed. It is supposed that the segment MN of Figure 20 (a) has been selected as the reference line and the point N as the reference point. In this mode, the segment MPd is displayed in addition to the input segment candidate NPd as shown in Figure 20 (b). Since the geometric data of the points Pd and M are known as described above, it is easy to display the segment MPd. Further, a scale EP' may be displayed with the segment NPd being the reference line and the point Pd being the reference point. Figure 20 (c) is the state of the CRT screen after V has been selected as the end point of the input segment and then the termination of input of the segment has been instructed. At this time, the geometric data of the segment MV are also stored in the data section 15 in addition to the geometric data of the segment NV. This mode is convenient for drawing a triangle for which the length of the side MN, and the magnitudes of _MNV and _NVM are given. Figure 20 (d) shows the case in which input of a segment is continued even after input of the segment NV is instructed. Similarly to (b), the segment MPd' is also displayed in addition to an input segment candidate VPd'.

As a further variation of this invention, a mode in which an internal dividing point of a reference line is selected as the reference point will be described with reference to figure 21. Now, suppose that a segment Ls has been selected as described above. And suppose that the user has input a numeral "5." Whereupon, based on the coordinate values of both ends Pa and Pf of the segment Ls, the coordinate values of the internal dividing points Pb, Pc, Pd and Pe are calculated and stored in the data section 15. Then, the distances between the current graphic cursor position Po and Pa, Po and Pb, ... Po and Pf are calculated respectively. And, the point whose distance is the smallest is selected from Pa, ..., Pf, as the reference point. The processing after that is the same as described above. Accordingly, in the case of Figure 21, the age EP is displayed and the angle regions are established, with Pe being as the reference point and Ls as the reference line, whereby the perpendicular bisector of a segment can simply be drawn additionally for instance.

As a further variation of the invention, a mode may be considered in which an externally dividing point on the prolonged line of a segment selected as the reference line is selected as the reference point. This mode would be implemented similarly to the above.

A data processing system is provided wherein a segment can additionally be drawn accurately and efficiently so that it contacts an existing segment at a desired angle. Also, setting of the value of the angle at each vertex in drawing a continuous series of segments can be carried out accurately and efficiently.

## Claims

1. A data processing system including a display, a pointing device for designating a point on a screen of said display, and a data storage apparatus, and characterised in further including:

   (a) means for selecting a line existing on the screen and a point thereon in response to the designation of a point on the screen by said pointing device,

   (b) means for generating geometric data of boundary lines of a plurality of angular regions on the screen, with the selected line as the reference line and centred on a reference point which is the selected point thereon,

   (c) means for determining the boundary line which is closest to a newly designated point on the basis of said geometric data of the boundary lines, determining the point thereon which is closest to the designated point, generating the geometric data of the determined point, and displaying the segment which starts at said reference point and ends at said determined point as an input candidate, each time a new point is designated by said pointing device,

   (d) means for determining that the segment displayed as an input candidate is the segment to be input finally, and

   (e) means for storing the geometric data of the end point of the segment determined by said means (d) into said data storage apparatus.

2. A data processing system as claimed in Claim 1 which, in addition to said means (a) through (e), further includes:

   (c′) means for displaying the segment which connects said reference point to a newly designated point each time a new point is designated by said pointing device, and

   (f) means for selecting either the mode in which said means (c) is activated or the mode in which said means (c′) is activated.

3. A data processing system as claimed in any preceding claim wherein, when no line is found to be selected as a reference line, said means (a) selects the point designated by said pointing device as a reference point, and selects the line of a predetermined direction passing through this point as a reference line.

4. A data processing system as claimed in any preceding claim which further includes,

   (a′) means for selecting the segment created just before as a reference line and selecting the end point of said segment as a reference point.

5. A data processing system as claimed in any preceding claim which further includes,

   (g) means for displaying a scale on the basis of the geometric data of the boundary lines generated by said means (b).

(a)

```
                          ┌─────────┐
                          │  START  │
                          └────┬────┘
                               │
                  ┌────────────────────────┐
                  │ SELECT A POINT Po ON    │──101
                  │ THE DISPLAY SCREEN      │
                  └────────────┬───────────┘
                               │
                          ╱─────────╲
                         ╱  IS THERE  ╲
          NO           ╱ AN EXISTING  ╲──102
      ┌───────────────┤ SEGMENT Ls IN ├
      │               ╲ THE SEGMENT   ╱
      │                ╲ EFFECTIVE   ╱
      │                 ╲ RANGE A1? ╱
      │                    YES
      │                     │
      │                ╱─────────╲
      │               ╱ IS THERE   ╲──103       NO
      │              ╱ THE VERTEX Ps ╲──────────────┐
      │             ┤ OF Ls IN THE    ├            │
      │              ╲ VERTEX         ╱            │
      │               ╲ EFFECTIVE    ╱             │
      │                ╲ RANGE Ap?  ╱              │
      │                   YES                       │
      │                    │             ┌──────────────────────┐
      │                    │             │ Pc=THE POINT CLOSEST  │──106
      │                    │             │ TO Po                 │
      │                    │             └──────────┬───────────┘
```

104
REFERENCE LINE
=HORIZONTAL LINE   PASSING THROUGH Po
REFERENCE POINT
=Po

105
REFERENCE LINE
=Ls
REFERENCE POINT
=Ps

REFERENCE LINE
=Ls
REFERENCE POINT
=Pc
107

(g) DISPLAY A SCALE ◄── GENERATE BOUNDARY LINE DATA (b)
                        OF THE ANGLE REGIONS

                          ╱─────────╲
                         ╱   MODE    ╲
                          ╲─────────╱

(c') ANALOGUE MODE          DIGITAL MODE (c)
     PROCESSING             PROCESSING

           DETERMINE THE END POINT (d)
           OF THE SEGMENT

     STORE THE START POINT AND END POINT (e)
     DATA OF THE SEGMENT

              ┌─────────┐
              │   END   │
              └─────────┘

FIG. 1

START

DRAWING A SINGLE SEGMENT (FIG.1) — 201

REFERENCE LINE=PRECEDING SEGMENT
REFERENCE POINT=END POINT OF THE PRECEDING SEGMENT    (a')

DISPLAY
A SCALE
(g)

GENERATE BOUNDARY LINE DATA OF
THE ANGLE REGIONS    (b)

MODE

(c')  ANALOGUE MODE
PROCESSING

DIGITAL MODE
PROCESSING  (c)

DETERMINE THE END POINT
OF THE SEGMENT    (d)

STORE THE END POINT
DATA OF THE SEGMENT    (e)

IS
THERE INSTRUCTION
TO TERMINATE
?

NO

YES

END

FIG. 2

EP 0 393 844 A2

```
                    ┌─────────────┐
                    │    START    │
                    └──────┬──────┘
                           │
                    ┌──────▼──────────────┐      301
         (a)        │ SELECT A SEGMENT Ls │
                    └──────┬──────────────┘
                           │
                    ┌──────▼──────────────────────┐   302
                    │ INPUT THE NUMBER OF PARTITIONS n │
                    └──────┬──────────────────────┘
                           │
                    ┌──────▼──────────────────┐   303
                    │ DISPLAY THE DIVIDING POINTS │
                    └──────┬──────────────────┘
                           │
                    ┌──────▼──────────────────┐   304
                    │ SELECT A DIVIDING POINT Ps │
                    └──────┬──────────────────┘
                           │
                    ┌──────▼──────────────┐   305
                    │ REFERENCE LINE=Ls    │
                    │ REFERENCE POINT=Ps   │
                    └──────┬──────────────┘
```

(a)

(g) DISPLAY A SCALE ◄─── GENERATE BOUNDARY LINE DATA OF THE ANGLE REGIONS (b)

MODE

(c') ANALOGUE MODE PROCESSING       DIGITAL MODE PROCESSING (c)

DETERMINE THE END POINT OF THE SEGMENT (d)

STORE THE START POINT AND END POINT DATA OF THE SEGMENT (e)

END

FIG. 3

FIG. 4

| | START POINT | END POINT | LINE TYPE |
|---|---|---|---|
| L 1 | $(X_{1s}, Y_{1s})$ | $(X_{1e}, Y_{1e})$ | $t_1$ |
| . . . . . | . . . . . . | . . . . . . | . . . |
| L i | $(X_{is}, Y_{is})$ | $(X_{ie}, Y_{ie})$ | $t_i$ |
| . . . . . | . . . . . . | . . . . . . | . . . |
| L n | $(X_{ns}, Y_{ns})$ | $(X_{ne}, Y_{ne})$ | $t_n$ |

FIG. 7

FIG. 5

EP 0 393 844 A2

FIG. 6

FIG. 8

Pse

Po(Xo, Yo)

Ls

Pss        Al

FIG. 9

Ps=Pse

Po(Xo, Yo)

Ls

Pss        Ap

FIG. 10

FIG. 11

FIG. 12

FIG. 13

FIG. 14

| | GEOMETRIC DATA |
|---|---|
| L 0 | . . . . . . |
| L 1 | . . . . . . |
| L 2 | . . . . . . |
| . . . | .. . . . . |
| L 0 ' | . . . . . . |
| L 1 ' | . . . . . . |
| . . . | . . . . . . |

FIG. 15

| | FIRST POINT | SECOND POINT | | K-TH POINT |
|---|---|---|---|---|
| . . . | . . . . | . . . . | . . . . . . . | . . . . |
| L L j | $(X_{j1}, Y_{j1})$ | $(X_{j2}, Y_{j2})$ | . . . . . . . | $(X_{jk}, Y_{jk})$ |
| . . . | . . . . . | . . . . . | . . . . . . . | . . . . |

FIG. 18

Arrow type     Cross hair type

FIG. 22

FIG. 16

FIG. 17

EPo=Po(previous)

EPv

EPv

Pd

## FIG. 19

Pf

Pe

Pd

Po

Pc

Pb

Pa

## FIG. 21

M

N

(a)

Reference line
M

EP

Pd

N

EP`

(b)

M

N          V

(c)

Pd`

M          EP`

EP

N              V

Reference line
(d)

FIG. 20

L1

(a)

L2

30deg

L1

(b)

L2

30deg

L1

(c)

FIG. 23